# EUROPEAN PATENT SPECIFICATION

(11) **EP 0 799 667 B1**
(45) Date of publication and mention of the grant of the patent: **28.02.2001**
(21) Application number: 97105123.0
(22) Date of filing: 26.03.1997
(51) Int. Cl.: B23K 35/28, B23K 35/02

(54) **Aluminum alloy brazing sheet for brazed heat exchanger**
Lotfolie aus Aluminiumlegierung für gelöteten Wärmeaustauscher
Feuille de brasage en alliage d'aluminium pour échangeur de chaleur brasé

(30) Priority: 02.04.1996 JP 8018496
(43) Date of publication of application: 08.10.1997
(73) Proprietor: ZEXEL CORPORATION, Tokyo (JP)
(72) Inventor: Tsuruno, Akihiro, Moka-shi, Tochigi (JP); Takigawa, Jun, Moka-shi, Tochigi (JP); Eto, Yoshihisa, Osato-gun, Saitama (JP)
(74) Representative: Hansen, Bernd, Dr. Dipl.-Chem.

(56) References cited:
- EP-A- 0 514 946
- EP-A- 0 552 567
- WO-A-84/00129
- US-A- 4 727 001

## Description

### Technical Field of the Invention

The invention relates to a brazing sheet to be used for a product having a passage for a fluid which possibly corrodes an aluminum alloy, such as an automobile radiator and heater core, and more particularly to an aluminum alloy brazing sheet for a brazed heat exchanger, which enhances a corrosion resistance of a product completed by brazing and can extend a service life of a heat exchanger.

### Prior Art

For a heat exchanger having a fluid passage such as an automobile radiator and heater core, a seam welded pipe formed of an aluminum alloy brazing sheet is formed into a flat tube and used.

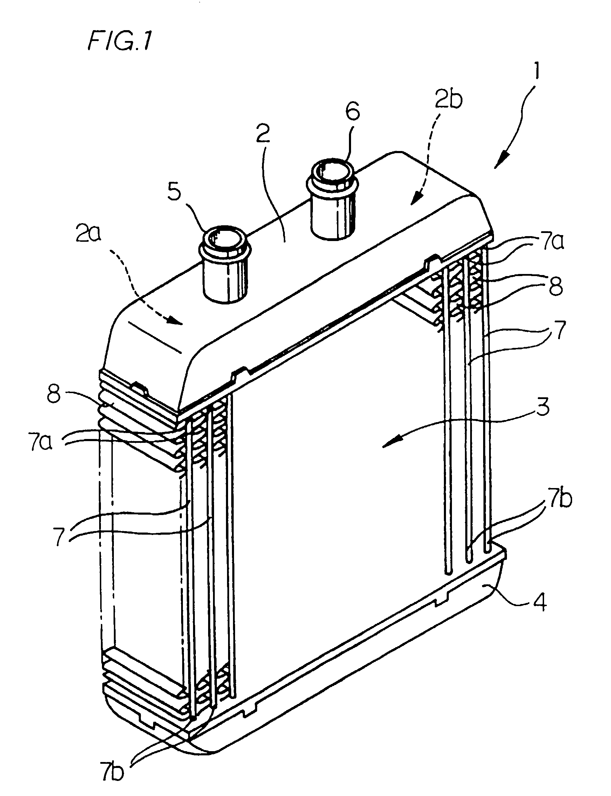

Fig. 1 is a perspective view showing an example of the structure of a heat exchanger.

As shown in Fig. 1, a heat exchanger 1 comprises a sorting tank 2, a core unit 3, and a fluid accumulating tank 4. The sorting tank 2 has its interior partitioned at about the center to divide longitudinally the tank 2 into two chambers, and a fluid inlet 5 for feeding a fluid into one chamber 2a and a fluid outlet 6 for discharging the fluid from the other chamber 2b are provided on the top face of the tank 2.

And, a plurality of flat holes (not shown) are provided in parallel on the bottom face of the sorting tank 2, and end portions 7a of a plurality of flat tubes 7 having the same cross sectional shape with such holes are aligned with and brazed to the holes. Therefore, the flat tubes 7 are provided to extend from the sorting tank 2 downwards in parallel to one another. Besides, a plurality of fins 8 which are formed of a sheet material formed into a corrugated shape are provided between the plurality of flat tubes 7 to have their parts contacted to the flat tubes 7.

Furthermore, the fluid accumulating tank 4 which has a plurality of holes (not shown) similar to those of the sorting tank 2 is provided at other ends 7b of the flat tubes 7, and these ends 7b of the tubes 7 are aligned with and brazed to the holes of the tank 4.

As described above, the flat tubes 7 are formed of the flattened seam welded pipes formed of a brazing sheet. A brazing sheet to be used for such a seam welded pipe is disclosed in, e.g., Japanese Patent Laid-Open Publication Hei 2-50934 that a brazing material is provided on both sides of a core material; Japanese Patent Laid-Open Publication Sho 59-74284 wherein a sacrificial anode is disposed on a surface of the core material on the side of a fluid passage and a brazing material is provided on a surface opposite to the surface on which the sacrificial anode is provided; and Japanese Patent Laid-Open Publication Hei 4-36600 wherein a sacrificial anode is provided on a surface of the core material on the side of a fluid passage, and an intermediate layer and a brazing material are sequentially provided on an opposite surface.

Generally, the alloys specified in JIS (Japanese Industrial Standard) A3003 are used for the core material, an Al-Si based alloy or Al-Si-Mg based alloy is used for the brazing material, and an Al-Zn based alloy or Al-Zn-Mg based alloy such as the alloys specified in JIS 7072 is used for the sacrificial anode or the intermediate layer.

In the heat exchanger 1 configured as described above, a cooling medium or heating medium (fluid) is charged into the chamber 2a through the fluid inlet 5, the fluid passes inside the flat tubes 7 connected to the chamber 2a, and enters the fluid accumulating tank 4. Then, the fluid moves through the fluid accumulating tank 4 and enters the flat tubes 7 connected to the chamber 2b. Then, the fluid moves through the flat tubes 7 towards the chamber 2b in the sorting tank 2, and discharged outside from the chamber 2b through the fluid outlet 6. Therefore, when hot water is used for example, while hot water passes through the flat tubes 7, it is heat-exchanged with air outside the heat exchanger 1, and the hot water temperature is lowered while the outside air temperature is raised.

In the field of automobile heat exchangers, demands for improvement of the performance and reduction of costs of heat exchangers with their weight and size reduced are increasing these years. Therefore, developments are being made to reduce the size, weight and cost by decreasing the material thickness and changing the structure of the heat exchanger.

But, in the case of the heat exchanger 1 structured as shown in Fig. 1, since the flat tubes 7 are formed of the seam welded pipe, the tubes 7 cannot be bent at some midpoint. Therefore, it is necessary to use the flat tubes 7 in the straight shape, and it is inevitable to provide a structure that the tank is formed on both sides of the tubes 7, but since a volume ratio occupied by the tanks 2 and 4 is large against the whole volume of the heat exchanger 1 as shown in Fig. 1, the size reduction of the heat exchanger configured as shown is limited.

Accordingly, there is proposed a heat exchanger which has its fluid passages formed by forming a brazing sheet which has a brazing material on both external surfaces of a core material or a laminated plate formed of a core material and an intermediate layer to provide a fluid passage, and laminating the formed plate and brazing at predetermined points to make flat tubes (Japanese Patent Laid-Open Publication No. Hei 1-208432, Japanese Patent Laid-Open Publication No. Hei 5-65582).

As described above, by using the brazing sheet having the brazing material on its both sides, a heat exchanger having a bent fluid passage can be produced. Therefore, a fluid accumulating tank is not needed, and the heat exchanger can be made small, lightweight and inexpensive.

However, the brazing sheets disclosed in Japanese Patent Laid-Open Publications Nos. Hei 1-208432 and Hei 5-65582 do not have sufficient corrosion resistance to be used at portions where an aluminum alloy is heavily corroded, such as automobile radiators and heater cores. Therefore, it has been demanded to develop an aluminum brazing sheet which is very good in corrosion resistance.

The present invention has been completed in view of the above problems, and aims to provide an aluminum alloy brazing sheet which can further improve corrosion resistance and can extend a service life of the heat exchanger.

The aluminum alloy brazing sheet according to the invention comprises a core material made of an aluminum alloy sheet material, an intermediate layer disposed on at least one side of the core material, and an aluminum alloy brazing material disposed on both external surfaces of a laminated plate formed of the core material and the intermediate layer; wherein
the core material contains 0.5 to 1.5 wt% of Mn and the balance of Al and inevitable impurities, and the inevitable impurities are limited to 0.6 wt% or below of Si and 0.7 wt% or below of Fe;
the intermediate layer consists of aluminum and inevitable impurities, the inevitable impurities are limited to a total amount of 1.0 wt% or below and have a thickness of 70 µm or more and a grain size of 50 µm or more, and a recrystallization temperature in brazing is lower than a melting temperature of the brazing material; and
the brazing material contains 7 to 15 wt% of Si and the balance of Al and inevitable impurities.

The core material can further contain 0.05 to 1.2 wt% of Cu. Besides, the core material can further contain 0.05 to 1.2 wt% of Zn.

The intermediate layer can further contain 0.05 to 0.3 wt% of Zr. And, the intermediate layer can further contain 0.05 to 5.0 wt% of Zn. Besides, the intermediate layer can contain 0.05 to 0.6 wt% of Mn. When it is determined that the Mn content in the core material is [Mn]_{c} in wt% and the Mn content in the intermediate layer is [Mn]ₘ in wt%, it is preferable that a mathematical expression ([Mn]_{c}-[Mn]ₘ) is 0.3 wt% or more.

Furthermore, the brazing material can contain 0.05 to 5.0 wt% of Zn.

This brazing material can be used for a brazed heat exchanger.

The recrystallization temperature of the intermediate layer can be made lower than the melting temperature of the brazing material by restricting the chemical components contained in the intermediate layer and their amounts to the above-described preferable ranges, and thermally treating an ingot obtained by casting for homogenization at 400 to 600°C for four hours or more.

As a result of the experiments and studies made by the inventors of this application in order to remedy the above-described problems, an intermediate layer was disposed as a sacrificial anode between an aluminum alloy core material and a brazing material, the contents of their chemical components were specified to an appropriate amount, and the thickness and grain size of the intermediate layer were specified. Thus, it was found that corrosion resistance can be further improved by a four-layered or five-layered brazing sheet.

For example, when a three-layered brazing sheet having a brazing material disposed on both sides of a core material is used, namely an intermediate layer is not disposed between the core material and the brazing material, corrosion takes place as follows.

First, Si contained in the brazing material enters the core material while brazing is being performed, or eutectic Si is produced originating from a grain boundary. The penetrated Si and eutectic Si have a potential higher than the nearby α-Al layer and the core material. Therefore, when they come in contact with a fluid (hot water or the like) which causes corrosion, the α-Al layer near the eutectic Si is corroded to form a corrosion path circuit to the core material, and the core material is corroded. And, since Si has penetrated the grain boundary of the core material, the grain boundary is heavily corroded. Therefore, the penetration of Si into the core material becomes serious to produce the eutectic Si deep in the thickness direction of the brazing sheet, and holes which pass through the brazing sheet are readily formed, deteriorating corrosion resistance.

WO 84 00129 A discloses a multilayer aluminium alloy brazing sheet, comprising a core (an Al alloy with high Mn content such as 3000-series alloy), two intermediate layers (one for each surface of the core sheet) bonding the core with an outer cladding layer (a high silicon aluminium alloy sheet such as a 4004 or 4104 alloy). The intermediate layer has a Si content between 6.8 and 8.2 wt%, Zn up to 0.2 wt%, the balance Al with other alloying elements up to 1.3 %.

Under such circumstances, the inventors of this application have found that when the intermediate layer is disposed as the sacrificial anode between the core material and the brazing material and fully works as the sacrificial anode, it is necessary to prevent the eutectic Si from penetrating into the intermediate layer and to control the region in which the eutectic Si has not penetrated have a predetermined thickness or more.

Therefore, the present invention specifies the thickness of the intermediate layer, the amount of the inevitable impurities such as Fe and Si in the intermediate layer, and the grain size, and controls the recrystallization temperature of the intermediate layer to be lower than the melting temperature of the brazing material. Thus, the eutectic Si is prevented from penetrating into the intermediate layer which has been disposed as the sacrificial anode between the core material and the brazing material, and a region in which the eutectic Si has not penetrated is formed, so that the intermediate layer works fully as the sacrificial anode. And, since the eutectic Si in the brazing does not reach the core material, no corrosion path circuit is formed between the brazing material and the core material.

Further description will be made of the aluminum alloy brazing sheet for a brazed heat exchanger according to the invention. First, reasons of limiting the compositions and chemical components contained in the core material will be described.

### Mn: 0.5 to 1.5 wt%

Mn is an element which can enhance the strength of the core material, make a potential high, and improve corrosion resistance. When the Mn content in the core material is less than 0.5 wt% to the total weight of the core material, an effect of enhancing the strength is lowered, and an effect of making the potential high is lowered, so that the corrosion resistance of the core material itself is lowered. And, since a potential difference from the intermediate layer becomes small, it is hard to let the intermediate layer fully work as the sacrificial anode, resulting in the degradation of corrosion resistance. On the other hand, when the Mn content in the core material exceeds 1.5 wt%, coarse compounds are produced, and material workability is deteriorated. And, even when more than 1.5 wt% of Mn is added to the core material, the effect of making the potential high is not improved further. Therefore, the Mn content in the core material is determined to be 0.5 to 1.5 wt% with respect to the total weight of the core material.

### Cu: 0.05 to 1.2 wt%

Cu is a solution in a matrix and has effects of improving the strength of the core material and making a potential high. When the Cu content in the core material is less than 0.05 wt% to the total weight of the core material, its effect may not be obtained fully depending on a potential balance with the intermediate layer, and corrosion resistance may be lowered. On the other hand, when the Cu content in the core material exceeds 1.2 wt%, material workability is deteriorated, and erosion that the core material is eroded by the brazing material is caused. Therefore, the Cu content in the core material is preferably 0.05 to 1.2 wt% with respect to the total weight of the core material.

### Zn: 0.05 to 1.2 wt%

Zn is an element having an effect of making a potential low, and can be added to the core material to control a potential balance with the intermediate layer in the invention. In other words, when the potential difference between the intermediate layer and the core material is excessively large, the intermediate layer is corroded and consumed at an early stage, so that the corrosion resistance of the member is degraded and the service life of the heat exchanger is made short. When the Zn content in the core material is less than 0.05 wt% with respect to the total weight of the core material, a potential difference between the intermediate layer and the core material tends to be large, and corrosion may progress at an early stage depending on the potential balance with the intermediate layer. On the other hand, when the Zn content in the core material exceeds 1.2 wt%, the potential difference between the core material and the intermediate layer becomes small or the core material has a smaller potential, so that the corrosion resistance of the member is lowered, and the service life of the heat exchanger is made short. Therefore, the Zn content in the core material is preferably 0.05 to 1.2 wt% with respect to the total weight of the core material.

### Si: 0.6 wt% or below

Si is an inevitable impurity contained in the core material. When the Si content as an inevitable impurity in the core material exceeds 0.6 wt%, corrosion susceptibility in the grain boundary becomes high, and corrosion resistance is degraded. Therefore, the Si content as the inevitable impurity in the core material is restricted to 0.6 wt% or below.

### Fe: 0.7 wt% or below

Fe is an inevitable impurity contained in the core material. When the Fe content as an inevitable impurity in the core material increases, pitting is caused, and corrosion resistance is degraded. Therefore, it is desirable that the Fe content is decreased as low as possible, but when the Fe content in the core material is 0.7 wt% or below, it is accepted. Accordingly, the Fe content as an inevitable impurity in the core material is restricted to 0.7 wt% or below.

Now, description will be made of reasons of limiting the compositions and chemical components contained in the intermediate layer and a thickness of the intermediate layer and reasons of limiting the grain size.

### Total amount of inevitable impurities: 1.0 wt% or below

When the amount of inevitable impurities such as Si and Fe contained in the intermediate layer increases, corrosion susceptibility becomes high, and corrosion resistance of the intermediate layer is deteriorated. And, since the intermediate layer is corroded and consumed early, corrosion resistance of the member is lowered, and the service life of the heat exchanger is shortened. Besides, since the grain size tends to be very fine, the eutectic Si of the brazing material reaches the core material during brazing. Then, a corrosion path circuit is easily formed between the brazing material and the core material, and the corrosion resistance is deteriorated and the service life of the heat exchanger is shortened. Therefore, the total amount of the inevitable impurities in the intermediate layer is determined to be 1.0 wt% or below.

### Zr: 0.05 to 0.3 wt%

Zr has effects of preventing recrystallization during brazing and coarsening the grain size. Therefore, when an appropriate amount of Zr is added to the intermediate layer, the eutectic Si is prevented from penetrating into the intermediate layer, and corrosion resistance is improved. When the Zr content in the intermediate layer is less than 0.05 wt% with respect to the total weight of the intermediate layer, the crystal grain diameter may become fine in view of the balance between the Fe content in the intermediate layer and the homogenizing heat treatment conditions. On the other hand, when the Zr content in the intermediate layer exceeds 0.3 wt%, coarse compounds are formed, and formability is deteriorated. Therefore, the Zr content in the intermediate layer is preferably 0.05 to 0.3 wt% with respect to the total weight of the intermediate layer.

### Zn: 0.05 to 5.0 wt%

Zn is an element having an effect of making a potential high. In the present invention, to control the potential balance with the core material, Zn can be added to the intermediate layer. In other words, when the potential difference between the intermediate layer and the core material is excessively small, the intermediate layer does not work as the sacrificial anode, and the core material is corroded. Therefore, the corrosion resistance of the member is deteriorated and the service life of the heat exchanger is shortened. And, when the potential difference between the intermediate layer and the core material is excessively large, the intermediate layer is corroded and consumed early, the corrosion resistance of the member is deteriorated, and the service life of the heat exchanger is shortened.

When the Zn content in the intermediate layer is less than 0.05 wt%, the potential difference between the intermediate layer and the core material tends to become small, and it may not work fully as the sacrificial anode depending on the potential balance with the core material. On the other hand, when the Zn content in the intermediate layer exceeds 5.0 wt%, strength and hardness of the intermediate layer become very high, and its rolling property and formability with respect to the core material become quite different. Therefore, rolling and forming become difficult, the potential difference between the core material and the intermediate layer becomes excessively large, the intermediate layer is corroded and consumed early, and corrosion resistance is deteriorated. Therefore, the Zn content in the intermediate layer is preferably 0.05 to 5.0 wt% with respect to the total weight of the intermediate layer.

### Mn: 0.05 to 0.6 wt%; [Mn]_{c}-[Mn]ₘ: 0.3 wt% or more

Mn can be added together with Zn to the intermediate layer in order to control the potential balance with the core material. When the Mn content in the intermediate layer is less than 0.05 wt%, the potential difference between the intermediate layer and the core material tends to become large, and the intermediate layer is corroded and consumed early depending on the potential balance with respect to the core material, and corrosion resistance is deteriorated. On the other hand, when the Mn content in the intermediate layer exceeds 0.6 wt%, the potential difference between the intermediate layer and the core material becomes small, and the intermediate layer does not work fully as the sacrificial anode. Therefore, the core material tends to be corroded, and corrosion resistance is deteriorated.

And, when it is assumed that the Mn content in the core material is [Mn]_{c} in wt% and the Mn content in the intermediate layer is [Mn]ₘ in wt%, if they do not satisfy a mathematical expression ([Mn]_{c}-[Mn]ₘ)≥0.3, the potential difference between the intermediate layer and the core material becomes excessively small, the core material tends to be corroded, and corrosion resistance is deteriorated. Therefore, the Mn content in the intermediate layer is preferably 0.05 to 0.6 wt% with respect to the total weight of the intermediate layer, and when it is assumed that the Mn content in the core material is [Mn]_{c} in wt% and the Mn content in the intermediate layer is [Mn]ₘ in wt%, it is preferable that ([Mn]_{c}-Mn]ₘ) is 0.3 wt% or more.

### Intermediate layer thickness: 70 µm or more, recrystallization temperature: less than the melting temperature of brazing material, grain size: 50 µm or more

To improve the corrosion resistance of the member, it is necessary that the chemical components contained in the intermediate layer and the contained amounts meet the above-described preferable range, and the intermediate layer thickness, the recrystallization completion temperature and grain size are appropriately selected. When the intermediate layer has a thickness of less than 70 µm, the recrystallization temperature during brazing is the melting temperature or higher of the brazing material, or the grain size is less than 50 µm, the eutectic Si of the brazing material tends to penetrate into the intermediate layer, the eutectic Si reaches the core material to form a corrosion path circuit, the corrosion resistance of the member is deteriorated, and the service life of the heat exchanger is shortened. Therefore, the thickness of the intermediate layer is determined to be 70 µm or more, the grain size is determined to be 50 µm or more, and the recrystallization temperature is determined to be lower than the melting temperature of the brazing material.

And, the recrystallization temperature can be controlled by limiting the chemical components contained in the intermediate layer and their contents to the above-described preferable range, and applying the homogenization heating treatment to the ingot obtained by casting at, e.g., 400 to 600°C for four hours or more.

Besides, description will be made of the chemical components contained in the brazing material and reasons of restricting the compositions.

### Si: 7 to 15 wt%

Since Si coexists with Al and has a low melting point, it is a basic component for obtaining a brazing material having good fluidity. When the Si content in the brazing material is less than 7 wt% with respect to the total weight of the brazing material, the melting point becomes high and a predetermined fluidity cannot be obtained, and brazing property is deteriorated. On the other hand, when the Si content in the brazing material exceeds 15 wt%, the melting point also becomes high, and a predetermined fluidity cannot be obtained. And, it is not desirable because coarse primary crystal Si is produced and workability is disturbed. Therefore, the Si content in the brazing material is determined to be 7 to 15 wt% with respect to the total weight of the brazing material.

### Zn: 0.05 to 5.0 wt%

Zn is an element having an effect of making a potential low, and can be added to the brazing material to control a potential balance with the intermediate layer in the invention. In other words, when the potential difference between the intermediate layer and the core material is excessively large, either the intermediate layer or the core material is corroded and consumed early, corrosion resistance of the member is deteriorated, and the service life of the heat exchanger is shortened. When the Zn content in the brazing material is less than 0.05 wt% with respect to the total weight of the brazing material, the potential difference between the intermediate layer and the brazing material becomes relatively large, and the intermediate layer may be corroded and consumed early depending on the potential balance with the intermediate layer. On the other hand, when the Zn content in the brazing material exceeds 5.0 wt%, the strength and hardness of the brazing material becomes excessively high, rolling property and formability become very different between the core material and the intermediate layer, and rolling and forming become difficult. Furthermore, since a self-corrosion and consumption speed of the brazing material is increased, corrosion resistance of the member is deteriorated, and the service life of the heat exchanger is shortened. Therefore, the Zn content in the brazing material is preferably 0.05 to 5.0 wt% with respect to the total weight of the brazing material.

Embodiments of the aluminum alloy brazing sheet for a brazed heat exchanger according to the invention will be described specifically in comparison with their comparative embodiments.

First, ingots of an aluminum alloy for a core material, aluminum or aluminum alloy for an intermediate layer, and an aluminum alloy for a brazing material, having various chemical components and compositions were produced, and they were processed in various combinations to produce clad materials having a thickness of 0.4 mm. But, all brazing materials were determined to have a clad rate of 10%. Chemical components and compositions of the aluminum alloy for a core material, the aluminum or aluminum alloy for an intermediate layer, and the aluminum alloy for a brazing material are shown in Tables 1, 2 and 3 below.

Then, the obtained clad materials were cut to short strips of 100 mm wide and 200 mm long. A commercially available non-corrosive flux was applied to be 5 g/m² on the entire surface of the strips. Then, the strips were vertically suspended in their longitudinal directions, heated up to 600°C in an atmosphere having an oxygen concentration of 200 ppm or below, and kept heated at 600°C for three minutes to perform the heating treatment for brazing.

Then, the obtained brazing heat treated materials were cut to a rectangular piece of 50 mm wide and 60 mm long, and a quadrilateral area to a point of 5 mm from the end of the corrosion resistance test surface toward the center and the entire back face were sealed with a sealing tape, to prepare a corrosion resistance test pieces.

As to the corrosion test, the corrosion resistance test piece was immersed in an OY water (an aqueous solution of 159 wt ppm of Cl, 60 wt ppm of SO₄, 1 wt ppm of Cu and 30 wt ppm of Fe), and left standing at 80°C for eight hours and left standing at room temperature for 16 hours. This process was succeedingly repeated for three months. And, the cross section of a corroded part was observed with a microphotograph, and a corroded depth was measured to evaluate corrosion resistance.

And, after heating the clad material to 550°C and holding for three minutes, a cross section of the heat-treated clad material was observed with a microphotograph to measure a grain size.

Besides, the brazing heat-treated material was placed in an atmosphere previously degassed with nitrogen, and a pitting potential was measured at a sweeping speed of 10 mV/min in an aqueous solution of 3% NaCl.

Combinations of the core material, intermediate layer and brazing material used in this embodiment are shown in Tables 4 through 6 below, and the evaluated results and measured results are shown in Tables 7 through 9 below. But, the corrosion resistance evaluation block shows the maximum corroded depth.

**Table 1**

| | Core material No. | Chemical component contents (wt%) | | | | |
|---|---|---|---|---|---|---|
| | | Si | Fe | Cu | Mn | Zn |
| Embodiments | A1 | 0.2 | 0.3 | - | 0.5 | - |
| | A2 | 0.2 | 0.3 | - | 1.0 | - |
| | A3 | 0.2 | 0.3 | - | 1.5 | - |
| | A4 | 0.2 | 0.3 | 0.05 | 1.0 | - |
| | A5 | 0.2 | 0.3 | 0.6 | 1.0 | - |
| | A6 | 0.2 | 0.3 | 1.2 | 1.0 | - |
| | A7 | 0.2 | 0.3 | - | 1.0 | 0.05 |
| | A8 | 0.2 | 0.3 | - | 1.0 | 0.6 |
| | A9 | 0.2 | 0.3 | - | 1.0 | 1.2 |
| | A10 | 0.2 | 0.3 | 0.3 | 1.0 | 0.4 |
| | A11 | 0.2 | 0.3 | 0.6 | 1.0 | 1.0 |
| | | | | | | |
| Comp. Emb. | A12 | 0.2 | 0.3 | - | 0.2 | - |
| | A13 | 0.2 | 0.3 | - | 2.0 | - |
| | A14 | 0.2 | 0.3 | 1.6 | 1.0 | - |
| | A15 | 0.2 | 0.3 | - | 1.0 | 1.5 |
| | A16 | 0.9 | 0.3 | - | 1.0 | - |
| | A17 | 0.2 | 1.0 | - | 1.0 | - |

**Table 2**

| | Intermediate layer No. | Chemical component contents (wt%) | | | | |
|---|---|---|---|---|---|---|
| | | Si | Fe | Mn | Zn | Zr |
| Embodiments | B1 | 0.2 | 0.3 | - | - | - |
| | B2 | 0.2 | 0.3 | - | - | 0.05 |
| | B3 | 0.2 | 0.3 | - | - | 0.1 |
| | B4 | 0.2 | 0.3 | - | - | 0.3 |
| | B5 | 0.2 | 0.3 | - | 0.05 | 0.1 |
| | B6 | 0.2 | 0.3 | - | 0.5 | 0.1 |
| | B7 | 0.2 | 0.3 | - | 2.0 | 0.1 |
| | B8 | 0.2 | 0.3 | - | 5.0 | 0.1 |
| | B9 | 0.2 | 0.3 | 0.05 | - | 0.1 |
| | B10 | 0.2 | 0.3 | 0.3 | - | 0.1 |
| | B11 | 0.2 | 0.3 | 0.6 | - | 0.1 |
| | B12 | 0.2 | 0.3 | 0.3 | 1.0 | 0.1 |
| | B13 | 0.2 | 0.3 | 0.6 | 1.5 | 0.1 |
| | | | | | | |
| Comp. Emb. | B14 | 0.2 | 0.3 | - | - | 0.6 |
| | B15 | 0.2 | 0.3 | - | 7.0 | 0.1 |
| | B16 | 0.2 | 0.3 | 1.0 | - | 0.1 |
| | B17 | 0.5 | 0.8 | - | - | - |

**Table 3**

| | Brazing material No. | Chemical component contents (wt%) | | |
|---|---|---|---|---|
| | | Si | Fe | Zn |
| Embodiments | C1 | 7.0 | 0.3 | - |
| | C2 | 10.0 | 0.3 | - |
| | C3 | 13.0 | 0.3 | - |
| | C4 | 10.0 | 0.3 | 0.05 |
| | C5 | 10.0 | 0.3 | 0.5 |
| | C6 | 10.0 | 0.3 | 2.0 |
| | C7 | 10.0 | 0.3 | 5.0 |
| | | | | |
| Comp. embodiments | C8 | 10.0 | 0.3 | 7.0 |
| | C9 | 5.0 | 0.3 | 0.05 |
| | C10 | 18.0 | 0.3 | 0.2 |

**Table 4**

| | No. | Core material No. | Intermediate layer | | | Brazing material No. | [Mn]_{c}-[Mn]ₘ (wt%) |
|---|---|---|---|---|---|---|---|
| | | | No. | Thickness µm | Grain size µm | | |
| Embodiments | 1 | A1 | B3 | 70 | 200 | C6 | 0.5 |
| | 2 | A2 | B3 | 70 | 200 | C6 | 1.0 |
| | 3 | A3 | B3 | 70 | 200 | C6 | 1.5 |
| | 4 | A4 | B3 | 70 | 200 | C6 | 1.0 |
| | 5 | A5 | B3 | 70 | 200 | C6 | 1.0 |
| | 6 | A6 | B3 | 70 | 200 | C6 | 1.0 |
| | 7 | A7 | B3 | 70 | 200 | C6 | 1.0 |
| | 8 | A8 | B3 | 70 | 200 | C6 | 1.0 |
| | 9 | A9 | B3 | 70 | 200 | C6 | 1.0 |
| | 10 | A10 | B3 | 70 | 200 | C6 | 1.0 |
| | 11 | A11 | B3 | 70 | 200 | C6 | 1.0 |

**Table 5**

| | No. | Core material No. | Intermediate layer | | | Brazing material No. | [Mn]_{c}-[Mn]ₘ (wt%) |
|---|---|---|---|---|---|---|---|
| | | | No. | Thickness µm | Grain size µm | | |
| Embodiments | 12 | A4 | B1 | 70 | 150 | C6 | 1.0 |
| | 13 | A4 | B2 | 70 | 200 | C6 | 1.0 |
| | 14 | A4 | B4 | 70 | 200 | C6 | 1.0 |
| | 15 | A4 | B5 | 70 | 200 | C6 | 1.0 |
| | 16 | A4 | B6 | 70 | 200 | C6 | 1.0 |
| | 17 | A4 | B7 | 70 | 200 | C6 | 1.0 |
| | 18 | A4 | B8 | 70 | 200 | C6 | 1.0 |
| | 19 | A4 | B9 | 70 | 200 | C6 | 0.95 |
| | 20 | A4 | B10 | 70 | 200 | C6 | 0.7 |
| | 21 | A4 | B11 | 70 | 200 | C6 | 0.4 |
| | 22 | A4 | B12 | 70 | 200 | C6 | 0.7 |
| | 23 | A4 | B13 | 70 | 200 | C6 | 0.4 |
| | 24 | A4 | B3 | 70 | 200 | C1 | 1.0 |
| | 25 | A4 | B3 | 70 | 200 | C2 | 1.0 |
| | 26 | A4 | B3 | 70 | 200 | C3 | 1.0 |
| | 27 | A4 | B3 | 70 | 200 | C4 | 1.0 |
| | 28 | A4 | B3 | 70 | 200 | C5 | 1.0 |
| | 29 | A4 | B3 | 70 | 200 | C7 | 1.0 |

**Table 6**

| | No. | Core material No. | Intermediate layer | | | Brazing material No. | [Mn]_{c}-[Mn]ₘ (wt%) |
|---|---|---|---|---|---|---|---|
| | | | No. | Thickness µm | Grain size µm | | |
| Comp. Embodiments | 30 | A12 | B3 | 70 | 200 | C6 | 0.2 |
| | 31 | A13 | B3 | 70 | 200 | C6 | 2.0 |
| | 32 | A14 | B3 | 70 | 200 | C6 | 1.0 |
| | 33 | A15 | B3 | 70 | 200 | C6 | 1.0 |
| | 34 | A16 | B3 | 70 | 200 | C6 | 1.0 |
| | 35 | A17 | B3 | 70 | 200 | C6 | 1.0 |
| | 36 | A4 | B14 | 70 | 200 | C6 | 1.0 |
| | 37 | A4 | B15 | 70 | 200 | C6 | 1.0 |
| | 38 | A4 | B16 | 70 | 200 | C6 | 1.0 |
| | 39 | A4 | B17 | 50 | 30 | C2 | 1.0 |
| | 40 | A4 | B3 | 70 | 200 | C8 | 1.0 |
| | 41 | A4 | B3 | 70 | 200 | C9 | 1.0 |
| | 42 | A4 | B3 | 70 | 200 | C10 | 1.0 |
| | 43 | A4 | B3 | 50 | 200 | C6 | 1.0 |
| | 44 | A4 | - | - | - | C2 | 1.0 |

**Table 7**

| | No. | Pitting potential | | Corrosion resistance | |
|---|---|---|---|---|---|
| | | Core material mV | Intermediate layer mV | Corroded depth µm | Corrosion reached part |
| Embodiments | 1 | -630 | -730 | 90 | Inter. layer |
| | 2 | -600 | -730 | 90 | Inter. layer |
| | 3 | -590 | -730 | 90 | Inter. layer |
| | 4 | -595 | -730 | 90 | Inter. layer |
| | 5 | -580 | -730 | 90 | Inter. layer |
| | 6 | -570 | -730 | 90 | Inter. layer |
| | 7 | -635 | -730 | 90 | Inter. layer |
| | 8 | -655 | -730 | 90 | Inter. layer |
| | 9 | -685 | -730 | 90 | Inter. layer |
| | 10 | -625 | -730 | 90 | Inter. layer |
| | 11 | -630 | -730 | 90 | Inter. layer |

**Table 8**

| | No. | Pitting potential | | Corrosion resistance | |
|---|---|---|---|---|---|
| | | Core material mV | Intermediate layer mV | Corroded depth µm | Corrosion reached part |
| Embodiments | 12 | -595 | -730 | 90 | Inter. layer |
| | 13 | -595 | -730 | 90 | Inter. layer |
| | 14 | -595 | -730 | 90 | Inter. layer |
| | 15 | -595 | -745 | 90 | Inter. layer |
| | 16 | -595 | -795 | 90 | Inter. layer |
| | 17 | -595 | -825 | 90 | Inter. layer |
| | 18 | -595 | -725 | 90 | Inter. layer |
| | 19 | -595 | -700 | 90 | Inter. layer |
| | 20 | -595 | -675 | 90 | Inter. layer |
| | 21 | -595 | -635 | 90 | Inter. layer |
| | 22 | -595 | -700 | 90 | Inter. layer |
| | 23 | -595 | -710 | 90 | Inter. layer |
| | 24 | -595 | -730 | 90 | Inter. layer |
| | 25 | -595 | -730 | 90 | Inter. layer |
| | 26 | -595 | -730 | 90 | Inter. layer |
| | 27 | -595 | -730 | 90 | Inter. layer |
| | 28 | -595 | -735 | 90 | Inter. layer |
| | 29 | -595 | -745 | 90 | Inter. layer |

**Table 9**

| | No. | Pitting potential | | Corrosion resistance | |
|---|---|---|---|---|---|
| | | Core material mV | Intermediate layer mV | Corroded depth µm | Corrosion reached part |
| Comp. Embodiments | 30 | -690 | -730 | 250 | Core material |
| | 31 | - | - | - | - |
| | 32 | - | - | - | - |
| | 33 | -700 | -730 | 300 | Core material |
| | 34 | -580 | -730 | - | Pass through |
| | 35 | -620 | -730 | - | Pass through |
| | 36 | - | - | - | - |
| | 37 | - | - | - | - |
| | 38 | -595 | -600 | - | Pass through |
| | 39 | -595 | -720 | - | Pass through |
| | 40 | - | - | - | - |
| | 41 | - | - | - | - |
| | 42 | - | - | - | - |
| | 43 | -595 | -730 | - | Pass through |
| | 44 | -595 | - | - | Pass through |

As shown in Tables 1 through 6, all Embodiment Nos. 1 through 29 indicated that corrosion stopped at the intermediate layer, indicating remarkable corrosion resistance.

On the other hand, as shown in Tables 1 through 3 and 7 through 9, Comparative Embodiment No. 30 had the Mn content in the core material lower than the lower limit according to the invention, the potential difference between the core material and the intermediate layer became small, and corrosion resistance was deteriorated. Comparative Embodiment Nos. 31 and 32 had the Mn or Cu content in the core material exceeded the upper limit of the invention, rolling workability in forming the sheet was deteriorated, and a good sheet could not be obtained.

And, Comparative Embodiment No. 33 had the Zn content in the core material which exceeded the range according to the invention, and corrosion resistance was deteriorated. Comparative Embodiment Nos. 34 and 35 had the Si or Fe content in the core material which exceeded the upper limit of the range according to the invention, corrosion resistance was extremely deteriorated, and a corroded portion had passed through the sheet in the corrosion resistance test.

Besides, Comparative Embodiment No. 36 had the Zr content in the intermediate layer which exceeded the upper limit of the range according to the invention, the rolling workability in forming the sheet was deteriorated, and a good sheet could not be obtained. Comparative Embodiment No. 37 had the Zn content in the intermediate layer which exceeded the upper limit of the range according to the invention, the rolling workability in forming the sheet was deteriorated, and a good sheet could not be obtained.

Comparative Embodiment No. 38 had the Mn content in the intermediate layer exceeded the upper limit of the range according to the invention, corrosion resistance was extremely deteriorated, and a corroded portion had passed through the sheet in the corrosion resistance test. Comparative Embodiment No. 39 had the aluminum base purity, which was used to produce an alloy ingot for the intermediate layer, of less than the lower limit of the range according to the invention, the Si and Fe contents which were inevitable impurities in the intermediate layer were increased, corrosion resistance was extremely deteriorated, and a corroded portion had passed through the sheet in the corrosion resistance test.

Furthermore, Comparative Embodiment No. 40 had the Zn content in the brazing material which exceeded the upper limit of the range according to the invention, the rolling workability in producing the sheet was deteriorated, and a good sheet could not be obtained. Comparative Embodiment Nos. 41 and 42 had the Si content in the brazing material which was outside the range according to the invention, the fluidity of the brazing material was degraded, and brazing could not be made.

In addition, since Comparative Embodiment No. 43 had the intermediate layer having a thickness of less than the lower limit of the range according to the invention, corrosion resistance was extremely deteriorated, and a corroded portion had passed through the sheet in the corrosion resistance test. Comparative Embodiment No. 44 had the contents of the chemical components in the core material and the brazing material which were in the range according to the invention, the intermediate layer was not used, corrosion resistance was extremely deteriorated, and a corroded portion had passed through the sheet in the corrosion resistance test.

As described above, according to the present invention, when the chemical components and compositions in the core material, the intermediate layer and the brazing material are determined to an appropriate amount, the intermediate layer thickness and grain size are specified appropriately, and the recrystallization temperature is controlled to be lower than the melting temperature of the brazing material, the aluminum alloy brazing sheet for a brazed heat exchanger excelling in corrosion resistance can be obtained.

## Claims

1. An aluminum alloy brazing sheet comprising a core material formed of an aluminum alloy sheet material, an intermediate layer which is disposed on at least one side of the core material, and an aluminum alloy brazing material which is disposed on both external sides of a laminated sheet formed of the core material and the intermediate layer, wherein
- the core material contains 0.5 to 1.5 wt% of Mn, 0.05 to 1.2 wt% of Cu contained optionally, 0.05 to 1.2 wt% of Zn contained also optionally, and the balance of Al and inevitable impurities, and the inevitable impurities are restricted to 0.6 wt% or below of Si and 0.7 wt% or below of Fe;
- the intermediate layer consists of aluminum, 0.05 to 0.3 wt% of Zr contained optionally, 0.05 to 5.0 wt% of Zn contained optionally, 0.05 to 0.6 wt% of Mn contained also optionally, and when it is assumed that the Mn content in the core material is [Mn]c in wt% and the Mn content in the intermediate layer is [Mn]m in wt%, a mathematical expression ([Mn]c - [Mn]m) is 0.3 wt% or more, and inevitable impurities, the inevitable impurities are limited to a total amount of 1.0 wt% or below, a thickness of 70 µm or more and a grain size of 50 µm or more, and a recrystallization temperature in brazing is lower than a melting temperature of the brazing material; and
- the brazing material contains 7 to 15 wt% of Si, 0.05 to 5.0 wt% of Zn contained optionally, and the balance of Al and inevitable impurities.

2. Use of an aluminium alloy brazing sheet as defined in claim 1 for a brazed heat exchanger.

## Patentansprüche

1. Lötblech aus Aluminiumlegierung, umfassend ein Kernmaterial, gebildet aus einem Blechmaterial aus Aluminiumlegierung, eine Zwischenschicht, die auf mindestens einer Seite des Kernmaterials vorgesehen ist, und einem Lötmaterial aus Aluminiumlegierung, das auf beiden externen Seiten des laminierten Blechs, gebildet aus dem Kernmaterial und der Zwischenschicht, vorgesehen ist,
- wobei das Kernmaterial 0,5 bis 1,5 Gew.% Mn enthält, wahlweise 0,05 bis 1,2 Gew.% Cu enthält, wahlweise 0,05 bis 1,2 Gew.% Zn enthält und der Rest Aluminium und unvermeidliche Verunreinigungen sind und die unvermeidlichen Verunreinigungen sind beschränkt auf 0,6 Gew.% oder geringer Si und 0,7 Gew.% oder geringer Fe;
- die Zwischenschicht besteht aus Aluminium, enthält wahlweise 0,05 bis 0,3 Gew.% Zr, wahlweise 0,05 bis 5,0 Gew.% Zn, wahlweise 0,05 bis 0,6 Gew.% Mn, und wenn davon ausgegangen wird, dass der Mn-Gehalt im Kernmaterial [Mn]c in Gew.% ist und der Mn-Gehalt der Zwischenschicht [Mn]m in Gew.% ist, ist der mathematische Ausdruck ([Mn]c - [Mn] m) 0,3 Gew.% oder grösser, und unvermeidlichen Verunreinigungen, die unvermeidlichen Verunreinigungen sind begrenzt auf eine Gesamtmenge von 1,0 Gew.% oder geringer, eine Dicke von 70 µm oder grösser und eine Korngrösse von 50 µm oder grösser und eine Rekristallisierungstemperatur beim Löten ist kleiner als die Schmelztemperatur des Lötmaterials; und
- das Lötmaterial enthält 7 bis 15 Gew.% Si, wahlweise 0,05 bis 5,0 Gew.% Zn und der Rest ist Aluminium und unvermeidliche Verunreinigungen.

2. Verwendung einer Lötfolie aus Aluminiumlegierung gemäss Anspruch 1 für einen gelöteten Wärmeaustauscher.

## Revendications

1. Feuille de brasage en alliage d'aluminium comprenant un matériau formant une âme formé d'un matériau en d'alliage d'aluminium, une couche intermédiaire se trouvant sur au moins un côté du matériau formant l'âme et un matériau pour brasage en alliage d'aluminium se trouvant sur les deux côtés externes d'une feuille stratifiée formée par le matériau constituant l'âme et par la couche intermédiaire, où :
- le matériau constituant l'âme contient de 0,5 à 1,5 % en poids de Mn ; de 0,05 à 1,2 % en poids de Cu contenu à titre facultatif, de 0,05 à 1,2 % en poids de Zn également contenu à titre facultatif, le restant étant Al et des inévitables impuretés, lesquelles impuretés inévitables sont limitées à 0,6 % en poids ou moins pour Si et à 0,7 % en poids ou moins pour Fe ;
- la couche intermédiaire est constituée d'aluminium , de 0,05 à 0,3 % en poids de Zr contenu à titre facultatif, et de 0,05 à 5,0 % en poids de Zn contenu à titre facultatif ; et de 0,05 à 0,6 % en poids de Mn également contenu à titre facultatif et, quand on considère que la teneur en Mn dans le matériau formant l'âme est [Mn]c en % en poids et que la teneur en Mn dans la couche intermédiaire est [Mn]m en % en poids, on a la relation mathématique ([Mn]c - [Mn]m) = 0,3 % en poids ou plus , et des inévitables impuretés, les inévitables impuretés étant limitées à une quantité totale de 1,0 % en poids ou moins , une épaisseur de 70 µm ou plus et une taille des grains de 50 µm ou plus , et une température de recristallisation, lors d'un brasage, est inférieure à la température de fusion du matériau de brasage ; et - le matériau de brasage contient de 7 à 15 % en poids de Si, de 0,05 à 5,0 % en poids de Zn contenu à titre facultatif, le restant étant Al et d'inévitables impuretés.

2. Utilisation d'une feuille de brasage en alliage d'aluminium selon la revendication 1, pour un échangeur de chaleur à braser.
